(19) Europäisches Patentamt
European Patent Office
Office européen des brevets

(11) **EP 1 505 541 A2**

(12) **EUROPÄISCHE PATENTANMELDUNG**

(43) Veröffentlichungstag:
**09.02.2005 Patentblatt 2005/06**

(51) Int Cl.$^7$: **G06T 7/00**

(21) Anmeldenummer: **04013429.8**

(22) Anmeldetag: **08.06.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **10.06.2003 DE 10326032**

(71) Anmelder: **hema electronic GmbH
73431 Aalen (DE)**

(72) Erfinder: **Louban, Roman, Dr.-Ing.
74564 Crailsheim (DE)**

(54) **Verfahren zum Selbsttest eines Bildverarbeitungssystems**

(57) Die Erfindung betrifft ein Verfahren zum Selbsttest der Beleuchtung und der Schärfe eines mit einem Kamerasensor aufgenommenen Licht-und-Schatten-Bildes, das mindestens eine Kante **3** enthält. Dabei sollen das Histogramm aus dem ersten Testbereich **4**, das den Hintergrund **1** enthält, und das Histogramm aus dem zweiten Testbereich **5**, das das Objekt **2** enthält, sowie das Grauwertprofil entlang der Suchlinie **6,** die quer zu der Kante **3** verläuft, als Gaußverteilungen behandelt und als Ausgangsdaten benutzt werden, aus denen die Objekthelligkeit $I_{surf}$ (*surface*), die Hintergrundhelligkeit $I_{bgrd}$ (*background*) sowie die Standardabweichung $\sigma_f$ (*focus*) des Grauwertprofils ermittelt und miteinander bzw. mit den Referenzwerten, die u.a. aus den kameracharakteristischen Daten berechnet wurden, verglichen werden sollen.

**Fig. 1**

**Beschreibung**

Die Erfindung betrifft ein Verfahren gemäß dem Oberbegriff des Anspruchs 1.

Insbesondere bezieht sich die Erfindung auf den Selbsttest der Beleuchtung und der Schärfe eines mit einem Kamerasensor aufgenommenen Licht-und-Schatten-Bildes, das mindestens eine Kante enthält. Das Verfahren gewährleistet dabei eine einwandfreie Erkennung aller auf dem Objekt vorhandenen Kanten, wobei die aus dem zu untersuchenden Bild dynamisch ermittelten Testwerte miteinander bzw. mit den u.a. aus den kameracharakteristischen Daten berechneten Referenzwerten, verglichen werden sollen.

Es ist Stand der Technik, dass man für den Selbsttest eines Bildverarbeitungssystem einen Helligkeitswert, z.B. maximaler, minimaler oder mittlerer Helligkeitswert, aus einem Testbereich sowie einen Kontrastwert entlang einer Suchlinie aus einem zu untersuchenden Bild benutzt (Industrielle Bildverarbeitung / Christian Demant, Bernd Streicher-Abel, Peter Waszkewitz. - Berlin; Heidelberg: Springer, 1998).

Derartige Verfahren beziehen sich jedoch auf Referenzwerte, die vom Rauschen und lokalen Störungen stark beeinflusst werden und damit für eine gute Beleuchtung und eine ausreichende Schärfe eines zu untersuchenden Bildes nicht geeignet sind. Deswegen erlauben sie keine sichere Aussage über die Beleuchtung und die Schärfe des zu untersuchenden Bildes und können bei weitem nicht gewährleisten, dass alle auf dem Objekt vorhandenen Kanten erkannt werden.

Die Erkennung einer Kante ist eine notwendige Voraussetzung für alle Verfahren, die die Detektierung, Vermessung oder Be- bzw. Verarbeitung eines Objektes beinhalten. Die Kantenerkennung ist die Basis dieser Verfahren und ist daher von erheblicher wirtschaftlicher Bedeutung.

Deshalb soll das Verfahren zum Selbsttest eines Bildverarbeitungssystem in Form einer Auswertung kantenspezifischer Merkmale durchgeführt werden, welche an einer typischen Kante dynamisch gewonnenen wurden und für die Erkennung weiterer Kanten ebenso verwendet werden können.

Es ist Stand der Technik, dass man für die generelle Kantensuche eine Umwandlung des gesamten Bildes in ein Kantenbild mit Hilfe verschiedener Kantenfilter (Digitale Bildverarbeitung / Bernd Jähne. - 4. Aufl. - Berlin, Heidelberg, etc.: Springer, 1997) benutzt. Neben dem erheblichen Rechenaufwand hat diese Methode den Nachteil, dass das Bild durch eine Filterung bearbeitet, d.h. geändert wird, was die Kantenerkennung selbst beeinflusst und damit das Ergebnis verfälscht. Dabei können manche Kanten wegen mangelhaften Kontrasts überhaupt nicht erkannt bzw. zufällige Stellen, die einen ausreichenden Beleuchtungsgradient aufweisen, fälschlicherweise als Kanten erkannt werden.

Ein weiteres Verfahren (DE 19902401 C2) sieht zuerst eine Binarisierung des Bildes vor. Nach der Binarisierung wird eine Kantendetektion vorgenommen. Um eine Binarisierung durchzuführen, muss ein Schwellwert gebildet werden. Dieser kann entweder vorgegeben oder aus dem Bildinhalt dynamisch ermittelt werden.

Der vorgegebene Schwellwert (DE 4131778 C2) berücksichtigt aber keine Abweichungen, z.B. Beleuchtungsschwankungen, die auf einer Serie von aufeinander folgenden Aufnahmen bzw. auf unterschiedlichen Bereichen des aktuellen Bildes vorhanden sind. Dabei kann das zu untersuchende Bild nicht sauber binarisiert werden, was ebenso eine falsche Erkennung der Kanten verursacht.

Den Schwellwert direkt aus dem Inhalt des aktuellen Bildes zu ermitteln, ist eine Möglichkeit das Kantendetektierungsverfahren an das zu untersuchende Bild anzupassen. Dafür benutzt man z.B. ein Histogramm (EP 0750272 B1, EP 0807297 B1), das die Häufigkeit von einzelnen, im Bild auftretenden Grauwerten darstellt. Aus dem absoluten oder lokalen Maximum bzw. Minimum des Histogramms kann ein Binarisierungsschwellwert entnommen werden.

Wenn das Histogramm jedoch für große Bildbereiche bestimmt wird, neigen Kanten dazu, verschmiert oder sogar zerstört zu werden. Wenn umgekehrt der zu binarisierende Bereich zu klein ist, kann dieser Bereich nicht sauber binarisiert werden. Das Verfahren, den zu binarisierenden Bildbereich in geeignete Teilstücke zu unterteilen (EP 0750272 B1), ist wiederum auf vorgegebene Parameter angewiesen. Damit verliert das Verfahren seine Flexibilität.

Eine Reihe von Kandidatenbinärbilder aufzunehmen und auszuwerten, welche mit fallenden bzw. mit steigenden Schwellwerten erzeugt wurden, um den bestmöglichen Binarisierungsschwellwert zu finden (EP 0807297 B1), ist sehr aufwändig und zeitraubend und ist vor allem nur in einer sehr beschränkten Anzahl vom Fällen möglich.

Darüber hinaus beeinflusst eine Binarisierung des Bildes die Kantenerkennung und damit verfälscht sie, genauso wie jede andere Bildfilterung das Ergebnis der Kantendetektierung. Deswegen soll die Kantenerkennung am besten auf dem Originalgrauwertbild erfolgen.

Es ist ferner bekannt, dass man eine Kante aus einem Grauwertbild direkt mittels eines Kantenmodells ermitteln kann (Industrielle Bildverarbeitung / Christian Demant, Bernd Streicher-Abel, Peter Waszkewitz. - Berlin; Heidelberg: Springer, 1998). Das betrifft besonders den Fall, wenn der Ort der Kante bereits bekannt ist. Die Suche nach Kanten mit einem Kantenmodell erfolgt normalerweise auf Suchlinien in einer bestimmten Richtung.

Die Kriterien für die Detektierung einer Kante ergeben sich aus dem Grauwertprofil entlang dieser Suchlinie.

Dabei unterscheidet man zwei Kantenrichtungen: ansteigende und abfallende Kanten. Von einer abfallenden Kante spricht man, wenn das Grauwertprofil von hell nach dunkel verläuft, im umgekehrten Fall hat man eine ansteigende Kante vor sich.

Ein typisches Verfahren benutzt folgende Parameter:

- Kantenhöhe: Zur Detektierung einer gültigen Kante fordert man, dass eine bestimmte Mindestdifferenz der Grauwerte entlang der Suchlinie auftritt. Dies bezeichnet man als Kantenhöhe.
- Kantenlänge: Die Kantenlänge gibt an, auf welcher Strecke die durch die Kantenhöhe festgestellte Mindestdifferenz der Grauwerte auftreten muss.

An diesem Verfahren, das als Stand der Technik gilt, ist nachteilig, dass die vorgegebene Kantenhöhe und Kantenlänge bei jedem zu untersuchenden Bild unverändert bleiben müssen, und damit keine dynamische Anpassung an das aktuelle Bild angeboten wird.

Eine andere Lösung ist vom DE 4435796 C1 bekannt, in dem ein Verfahren zur automatischen Erkennung von Kanten und Durchmessern in Bildern beschrieben ist. Mit dessen Hilfe kann eine Kante nach einem vorgegebenen Profil und nach einem vorgegebenen prozentualen Schwellwert, der eine Ähnlichkeitsquote, z.B. mehr als 75%, erreicht hat, ermittelt werden.

Dabei benötigt man aber eine Musterkante, deren Profil weiter benutzt werden soll, und ebenso einen prozentualen Schwellwert als vorgegebenen Parameter. Deswegen bleibt dieses Verfahren vollständig objektspezifisch und bietet keine Anpassung an das zu untersuchende Bild.

Zusammenfassend können die obengenannten Methoden keine flexible und gleichzeitig explizite Kantenerkennung auf einem zu untersuchenden Bild gewährleisten und deswegen auch nicht für einen Selbsttest eines Bildverarbeitungssystem benutzt werden.

Der Erfindung liegt die Aufgabe zugrunde, ein Verfahren zum Selbsttest eines Bildverarbeitungssystems zu schaffen, das auf eine einfache und sichere Weise überprüft, ob die Beleuchtung und Schärfe der Bildaufnahme ausreichend sind, um die auf dem zu untersuchenden Bild vorhandenen Kanten zu erkennen.

Die Lösung des technischen Problems ergibt sich durch die Merkmale der Patentansprüche 1 bis 10.

Erfindungsgemäß soll aus einem Testbereich, der den Hintergrund enthält, und aus einem weiteren anderem Testbereich, der das Objekt enthält, jeweils ein Histogramm sowie entlang einer Suchlinie, die quer zur zu untersuchenden Kante verläuft, ein Grauwertprofil gewonnen werden.

Dabei geht man davon aus, dass das Objekt beispielsweise immer heller als der Hintergrund ist. Ansonsten sollen die Rollen des Objektes und des Hintergrunds vertauscht werden.

Desweiteren geht man davon aus, dass das Objekt und der Hintergrund homogen sind.

*Gemäß Anspruch 1* sollen das Histogramm und das Grauwertprofil als Gaußverteilungen behandelt und als Ausgangsdaten für den Selbsttest verwendet werden, aus denen die Objekthelligkeit $I_{surf}$ *(surface),* die Hintergrundhelligkeit $I_{bgrd}$ *(background)* sowie die Standardabweichung $\sigma_f$ *(focus)* des Grauwertprofils als kantenspezifische Merkmale ermittelt werden.

Es ist bekannt, dass die Intensitätsverteilung eines Strahles ein Gaußsches Profil aufweist (Technische Optik: Grundlagen und Anwendungen / Gottfried Schröder. - 7.Aufl. -Würzburg: Vogel, 1990 (Kamprath-Reihe), S. 88). Da eine Oberfläche wegen ihrer Reflexion als Strahlquelle betrachtet werden kann, darf eine Helligkeitsverteilung, die von der Oberfläche über die Kante zum Hintergrund geht, mit einer Gaußverteilung beschrieben werden (Digitale Bildverarbeitung / Bernd Jähne. - 4. Aufl. - Berlin, Heidelberg, etc.: Springer, 1997). Dieses Modell hat sich auch als das Beste für die genaue Berechnung der Kantenposition mit Subpixel-Genauigkeit erwiesen (A Comparison of Algorithms for Sub-pixel Peak Detection / D. K. Naidu, R. B. Fisher. Department of Artifical Intelligence, University of Edinburgh, Scotland, U.K., DAI Research Paper No. 553, Oktober 17, 1991). Deshalb kann für die Beschreibung des Grauwertprofils ein Gaußsches Profil angenommen werden.

Ein Histogramm ist eine Häufigkeitsverteilung der Helligkeit auf einem Objekt bzw. seinem Hintergrund. In natürlichen Bildern hat der Bildinhalt meistens ein mit der Ortsfrequenz abfallendes Amplitudenspektrum, wogegen das Rauschen ein im Frequenzbereich etwa konstantes Spektrum aufweist. Daraus folgt, dass das Histogramm sowie das Grauwertprofil auch ein Gaußsches Profil (Methoden der digitalen Bildsignalverarbeitung / Piero Zamperoni. - Braunschweig / Wiesbaden: Friedr. Vieweg & Sohn, 1989) bzw. ein aus mehreren Gaußverteilungen resultierendes Profil (Digitale Bildverarbeitung / Bernd Jähne. - 4. Aufl. - Berlin, Heidelberg, etc.: Springer, 1997) aufweisen.

Der Helligkeitswert, der am häufigsten an der Oberfläche eines Objektes aufgetreten ist, kann als Helligkeit dieses Objektes definiert werden. Dieses Verfahren weist der zu untersuchenden Oberfläche eine objektive Objekthelligkeit $I_{surf}$ zu, solange eine Störung mit einem bestimmten Helligkeitswert nicht eine größere oder vergleichbare Häufigkeit aufweist, wie die der Objekthelligkeit $I_{surf}$. Dann ist es nicht mehr möglich zwischen der Störung und der Hauptoberfläche selbst zu unterscheiden (z.B. Schachbrett). Das gleiche gilt auch für den Hintergrund, der eine Hintergrundhelligkeit $I_{bgrd}$ aufweist.

Aus dem Histogramm des ersten zu untersuchenden Testbereiches findet man die Hintergrundhelligkeit $I_{bgrd}$ und aus dem Histogramm des zweiten zu untersuchenden Testbereiches - die Objekthelligkeit $I_{surf}$. Für diese Helligkeiten soll der am häufigsten vorkommende Wert des entsprechenden Histogramms genommen werden.

Anhand dieser gewonnenen Merkmale soll zuerst die Beleuchtung der Aufnahme kontrolliert werden, wobei die Helligkeitswerte $I_{bgrd}$ und $I_{surf}$ nach folgenden Bedingungen überprüft werden:

$$I_{surf\_min} < I_{surf} \leq I_{surf\_max};$$

$$I_{bgrd} \leq I_{bgrd\_max},$$

wobei:

$I_{surf\_min}$ -          die untere Grenze des zulässigen Helligkeitsbereiches des Objektes:

$$I_{surf\_min} = I_{max\_abs} * \eta_0 ;$$

$I_{max\_abs}$ -          die absolut maximale Helligkeit (z.B. 255 bei Vollaussteuerung und 8-bit Quantisierung), die ein Aufnahmesensor aufweisen kann;

$I_{surf\_max}$-          die obere Grenze des zulässigen Helligkeitsbereiches des Objektes, die der oberen Grenze des Linearitätsbereiches des Aufnahmesensor $I_{lin}$ (z.B. 220) entspricht:

$$I_{surf\_max} = I_{lin} ;$$

$I_{bgrd\_max}$ -          die obere Grenze des zulässigen Helligkeitsbereiches des Hintergrundes, die dynamisch berechnet werden soll:

$$I_{bgrd\_max} = I_{surf} * \eta_0 ;$$

$\eta_0$ -          der Helligkeitsfaktor, der eine allgemeine grundlegenden Konstante für die Kantenerkennung darstellt:

$$\eta_0 = \frac{\xi_2}{\xi_1} = e^{-\frac{3}{2}};$$

$\xi_1$ -          der Wendepunktkoeffizient, der die Intensität eines Strahles am Wendepunkt seiner Intensitätsverteilung bestimmt:

$$\xi_1 = e^{-\frac{1}{2}};$$

$\xi_2$ -          der Randpunktkoeffizient, der die Intensität eines Strahles an seinem Rand bestimmt:

$$\xi_2 = e^{-2}.$$

Falls die obengenannten Bedingungen nicht erfüllt sind, ist das aufgenommene Bild nicht korrekt beleuchtet. Damit sind weder Schärfenkontrolle noch weitere Verarbeitungsschritte des Bildes sinnvoll.

Ansonsten ist die Beleuchtung der Aufnahme ausreichend, um eine Kante auf dem zu untersuchenden Bild sicher zu erkennen. Dann darf der Selbsttest des Bildverarbeitungssystems weiter fortgeführt werden, wobei die Schärfe der Aufnahme kontrolliert werden soll.

Aus dem Grauwertprofil kann mit Hilfe bekannter konventioneller Rechenmethoden, z.B. die Methode der kleinsten Quadrate, die Standardabweichung $\sigma_f$ des Gaußschen Profils ermittelt werden.

Diese Standardabweichung $\sigma_f$ ist eine eindeutige Charakteristik der Kante, an der das Grauwertprofil gewonnen wurde, und weist bei dem am schärfsten aufgenommenen Bild einen minimalen Wert $\sigma_{f\_min}$ auf. Der Wert $\sigma_f$ kann auch als Mittelwert $\overline{\sigma_f}$ gewonnen werden, der aus mehreren Stellen der zu untersuchenden Kante ermittelt wurde. Aus dem Wert $\sigma_{f\_min}$ kann ein kantenspezifischer zulässiger maximaler Wert $\sigma_{f\_max}$ berechnet werden, der als Referenzwert für eine weitere Schärfenkontrolle verwendet werden darf:

$$\sigma_{f\_max} = \sigma_{f\_min} + \Delta\sigma_f,$$

wobei:

$\Delta\sigma_f$ - die zulässige Abweichung der Standardabweichung $\sigma_f$ von dem minimalen Wert $\sigma_{f\_min}$, die nach Erfahrungswerten festgestellt werden muss.

Da sich die zu untersuchende Kante sowohl genau zwischen zwei Pixeln als auch innerhalb eines Pixels befinden könnte, wird die maximale zulässige Standardabweichung $\sigma_{f\_max}$ beispielsweise um 0.5 Pixel erhöht ($\Delta\sigma_f$ = 0.5) und damit als

$$\sigma_{f\_max} = \sigma_{f\_min} + 0.5$$

berechnet werden.

Erfindungsgemäß soll die ermittelte Ständardabweichung $\sigma_f$ mit der maximal zulässigen Standardabweichung $\sigma_{f\_max}$ verglichen werden, die im Voraus berechnet werden muss. Falls gilt:

$$\sigma_f \leq \sigma_{f\_max} ,$$

ist die zu untersuchende Kante scharf genug abgebildet und damit ist die Schärfe des aufgenommenen Bildes in Ordnung. Ansonsten ist das zu untersuchende Bild für eine weitere Bildverarbeitung nicht geeignet.

*Gemäß Anspruch 2* kann der Selbsttest für ein homogenes Objekt und ein homogener Hintergrund mit:

$$I_{bgrd} > I_{surf} * \eta_0,$$

durchgeführt werden, solange die Hintergrundhelligkeit $I_{bgrd}$ den entsprechenden maximalen Grenzwert für eine noch erkennbare Kante :

$$I_{bgrd\_max} = I_{surf} * \eta$$

nicht überschreitet, wobei: $\eta$ - ein Helligkeitskoeffizient, dessen Größe im Bereich:

$$\eta_0 \leq \eta \leq (1 - 2 * \eta_0)$$

nach Erfahrungswerten festgestellt werden kann.

Die Art der zu untersuchenden Kante soll im Voraus bekannt sein, da diese Kante speziell für den Selbsttest ausgewählt wird und den Erwartungen entsprechen soll.

Normalerweise weist keine Oberfläche bzw. kein Hintergrund eine 100%-ige Homogenität auf. Der Selbsttest kann bei einem inhomogenen Objekt und einem inhomogenen Hintergrund durchgeführt werden, falls ihre Homogenitäten $H_{surf}$ und $H_{bgrd}$ *gemäß Anspruch 3* eine minimale Homogenität $H_{min}$ nicht unterschreiten, wobei:

$$H_{surf} = 1 - \frac{2 * \sigma_{I_{surf}}}{I_{surf}} ;$$

$\sigma_{I_{surf}}$ - die Standardabweichung der Gaußförmigen Histogrammkurve des Objektes;

$$H_{bgrd} = 1 - \frac{2 * \sigma_{I_{bgrd}}}{I_{bgrd}} \; ;$$

$\sigma_{I_{bgrd}}$ -  die Standardabweichung der Gaußförmigen Histogrammkurve des Hintergrundes;

$$H_{min} = (1 - \eta_0) \; .$$

In diesem Fall kann noch die Erkennung der zu untersuchenden Kante und dementsprechend eine Kontrolle der Beleuchtung und der Schärfe des aufgenommenen Bildes gewährleistet werden.

Dabei verschärfen sich die Testbedingungen für die Beleuchtung, die man erfindungsgemäß entweder mit den dynamisch korrigierten Grenzwerten

$$I_{surf\_min} = I_{max\_abs} * \eta_0 + 2 * \sigma_{I_{surf}} \; ;$$

$$I_{surf\_max} = I_{lin} - 2 * \sigma_{I_{surf}} \; ;$$

$$I_{bgrd\_max} = I_{surf} * \eta_0 - 2 * \sigma_{I_{surf}} * \eta_0 - 2 * \sigma_{I_{bgrd}}$$

oder mit den Grenzwerten, die jeweils mit einem eigenen festen Koeffizient korrigiert sind,

$$I_{surf\_min} = I_{max\_abs} * \frac{\eta_0}{1 - \eta_0} \; ;$$

$$I_{surf\_max} = I_{lin} * \frac{1}{1 + \eta_0} \; ;$$

$$I_{bgrd\_max} = I_{surf} * \eta_0 * \frac{1 - \eta_0}{1 + \eta_0}$$

kontrollieren kann.

*Gemäß Anspruch 4* kann der Selbsttest an einer schwacherkennbaren Kante *3* zwischen einem inhomogenen Objekt *2* und einem inhomogenen Hintergrund *1* mit:

• falls die Beleuchtung mit einem dynamisch korrigierten Grenzwert kontrolliert wird:

$$I_{bgrd} > I_{surf} * \eta_0 - 2 * \sigma_{I_{surf}} * \eta_0 - 2 * \sigma_{I_{bgrd}} \; ;$$

• falls die Beleuchtung mit einem Grenzwert kontrolliert wird, der mit einem festen Koeffizienten korrigiert ist:

$$I_{bgrd} > I_{surf} * \eta_0 * \frac{1 - \eta_0}{1 + \eta_0} \; ,$$

durchgeführt werden kann, wenn dabei gilt:

$$H_{surf} \geq H_{min} \; ;$$

$$H_{bgrd} \geq H_{min} ,$$

und solange die Hintergrundhelligkeit $I_{bgrd}$ den entsprechenden maximalen Grenzwert für eine noch erkennbare Kante $I_{bgrd\_max}$ nicht überschreitet, der folgendermaßen definiert werden kann:

- falls die Beleuchtung mit einem dynamisch korrigierten Grenzwert kontrolliert wird:

$$I_{bgrd\_max} = (I_{surf} - 2 * \sigma_{I_{surf}}) * \eta - 2 * \sigma_{I_{bgrd}};$$

- falls die Beleuchtung mit einem Grenzwert kontrolliert wird, der mit einem festen Koeffizienten korrigiert ist:

$$I_{bgrd\_max} = I_{surf} * \frac{1 - \eta_0}{1 + \eta_0} * \eta ,$$

wobei: $\eta$ - ein Helligkeitskoeffizient, dessen Größe im Bereich:

$$\eta_0 \leq \eta \leq (1 - 2 * \eta_0)$$

nach Erfahrungswerten festgestellt werden kann.

Die Art der zu untersuchenden Kante soll im Voraus bekannt sein, da diese Kante speziell für den Selbsttest ausgewählt wird und den Erwartungen entsprechen soll.

*Gemäß Anspruch 5* können die untere und die obere Grenze des zulässigen Helligkeitsbereiches des Objektes $I_{surf\_min}$ und $I_{surf\_max}$ sowie die obere Grenze des zulässigen Helligkeitsbereiches des Hintergrundes $I_{bgrd\_max}$, die unter konkreten Aufnahmebedingungen ganz spezifisch aussehen können, nach Erfahrungswerten festgestellt und im weiteren als Referenzwerte verwendet werden.

*Gemäß Anspruch 6* kann der Wert $I_{surf}$, falls die entsprechenden Bedingungen für die Beleuchtungskontrolle erfüllt sind, dazu benutzt werden, um den unteren Helligkeitsschwellwert

$$I_{sprt\_dark} = I_{surf} * \eta_0$$

und den oberen Helligkeitsschwellwert

$$I_{sprt\_light} = I_{surf} * (1 - \eta_0)$$

zu berechnen, welche zur Abtrennung des mittleren Bereiches des Grauwertprofils von beiden äußeren Randbereichen dienen, damit die Ermittlung der Standardabweichung $\sigma_f$ mit wesentlich höherer Genauigkeit und Sicherheit ausschließlich aus dem mittleren Bereich der Kurve mit Hilfe bekannter konventioneller Rechenmethoden, z.B. die Methode der kleinsten Quadrate, durchgeführrt werden kann.

*Gemäß Anspruch 7* soll die Hilfsteststrecke $I_0$, die man als Abstand zwischen den Positionen auf dem Grauwertprofil ermittelt, an denen das Profil zuerst den Wert $I_{sprt\_dark}$ und zuerst den Wert $I_{sprt\_light}$ aufweist, ohne einen Verallgemeinerungsverlust als Standardabweichung $\sigma_f$ des Gaußförmigen Grauwertprofils angenommen werden:

$$\sigma_f \cong I_0.$$

*Gemäß Anspruch 8* soll die Suchlinie, entlang der ein Grauwertprofil gebildet wird, die auch mehrmals angelegt werden kann, quer zur gesuchten Kante, jedoch innerhalb des Testbereiches liegen. Somit wird eine wesentlich präzisere Erkennung der Kante gewährleistet, da das Grauwertprofil und das Histogramm aus der gleichen Pixelmenge gewonnen werden. Weiterhin kann das Grauwertprofil sowohl aus einer einzelnen Pixelreihe als auch als Mittelwertkurve aus mehreren parallel zur Suchlinie liegenden benachbarten Pixelreihen gebildet werden. Die Anzahl der parallel zur Suchlinie liegenden benachbarten Pixelreihen, die zur Bildung des Grauwertprofils hinzugezogen werden, kann z. B. mit drei belegt werden. Damit wird eine sichere und genaue Ermittlung der Standardabweichung $\sigma_f$ gewährleistet.

*Gemäß Anspruch 9* soll nur jede einzelne zu untersuchende Kurve aber nicht das Bild selbst geglättet werden. Damit werden die zu untersuchenden Kurven aus original Werten gebildet und nicht schon im Voraus verfälscht.

*Gemäß Anspruch 10* soll eine morphologische Filterung für die Glättung der zu untersuchenden Kurve verwendet werden. Diese verursacht keine Verfälschung der zu untersuchenden Kurve, wie beim Einsatz konventioneller Filtermethoden, und erlaubt damit eine fehlerfreie Kurvendiskussion.

Durch das hier genannte Verfahren zum Selbsttest eines Bildverarbeitungssystems kann auf den, aus dem Stand der Technik bekannten, Selbsttest anhand der Ermittlung eines maximalen, minimalen oder mittleren Helligkeitswertes sowie eines Helligkeitsgradienten verzichtet werden.

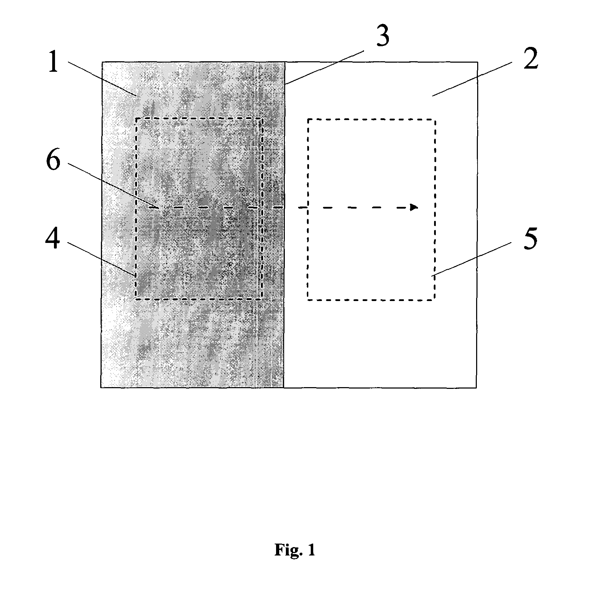

Die Einzelheiten der Erfindung werden in den nachfolgenden Ausführungsbeispielen anhand der **Fig. 1 - 3** erläutern.

Als Beispiel kann angenommen werden, dass eine einfache Kante 3 eines hellen Objektes 2 auf einem dunklen Hintergrund *1* entlang der Suchlinie *6* **(Fig. 1)** untersucht werden soll.

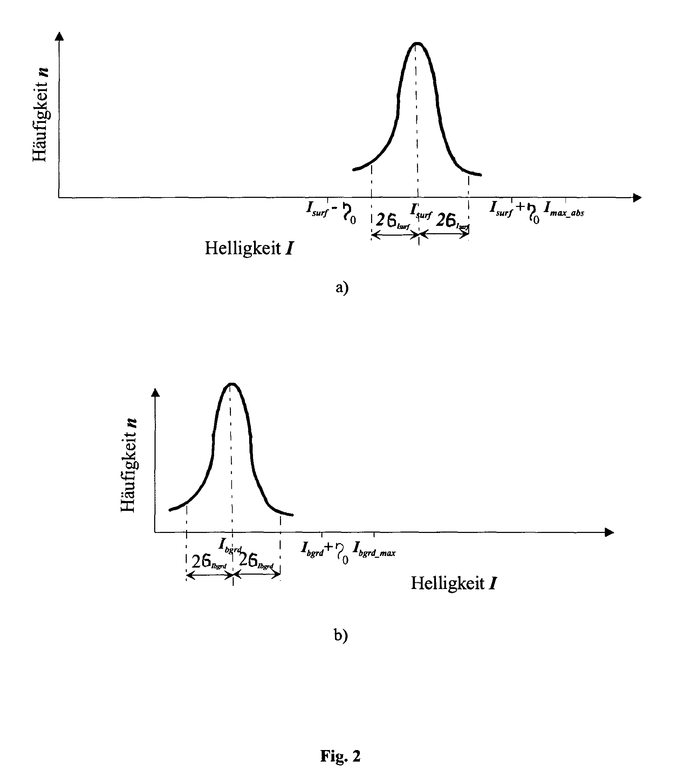

Mit Hilfe eines Histogramms **(Fig. 2)** kann sowohl die Objekthelligkeit $I_{surf}$ **(Fig. 2, a)** aus dem Testbereich *5* **(Fig. 1)** als auch die Hintergrundhelligkeit $I_{bgrd}$ **(Fig. 2, b)** aus dem Testbereich *4* **(Fig. 1)** ermittelt werden.

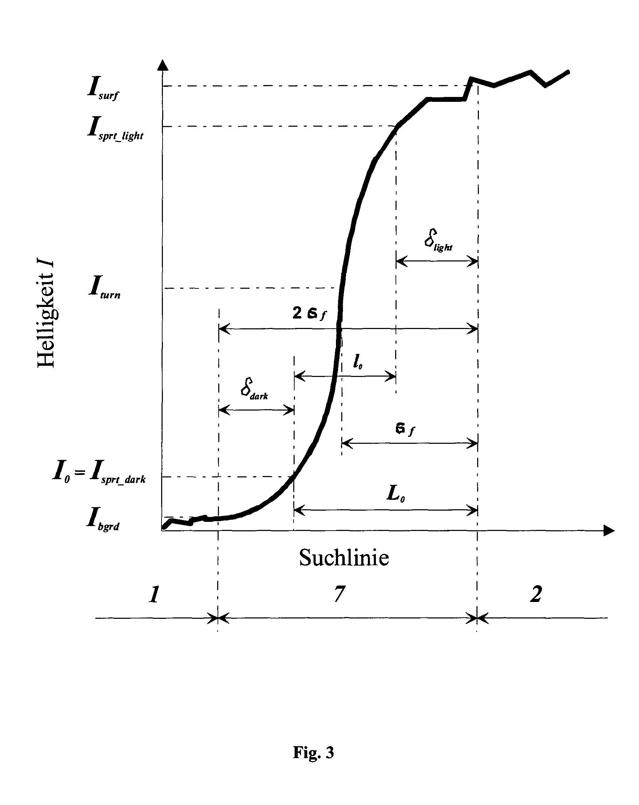

Die Standardabweichung $\sigma_f$ des Grauwertprofils, das entlang einer Suchlinie *6* beispielsweise von dem dunklen Hintergrundbereich *1* zum hellen Objektbereich *2* gewonnen wurde (**Fig. 3**), kann z.B. mit Hilfe der Methode der kleinsten Quadraten ermittelt werden.

Um die Grenzwerte für die Objekt- und Hintergrundhelligkeit sowie für die Schärfe des Verfahrens, das an einer typischen Kante durchgeführt werden kann, zum Selbsttest eines Bildverarbeitungssystems zu definieren, soll zuerst ein Verfahren zur Kantensuche beschrieben werden, das dem Selbsttest zugrunde liegt.

Wie bereits oben begründet wurde, weist das Histogramm sowie das Grauwertprofil ein Gaußsches bzw. ein aus mehreren Gaußverteilungen resultierendes Profil auf. Das bedeutet, dass diese Kurven eine Normalverteilung nach Gauß und damit eine exponentielle Funktion darstellen und deshalb bestimmte Verhältnisse zwischen charakteristischen Punkten besitzen.

Das Grauwertprofil kann als Gaußsches Profil folgendermaßen beschrieben werden:

$$I(x) = I_{surf} * e^{-\frac{x^2}{2*\sigma_f^2}}, \qquad (1)$$

wobei:

$I(x)$ - aktuelle Helligkeit, die der zu untersuchende Punkt auf der Kante aufweist, der sich in der Entfernung $x$ vom Profilmaximum befindet;

$I_{surf}$ - Objekthelligkeit, die auf dem Profilmaximum erstmalig und sicher auftritt;

$x$ - die Entfernung des zu untersuchenden Punktes von dem Punkt, der das Profilmaximum aufweist.

Die wichtigsten Punkte auf dem Grauwertprofil für das vorliegenden Verfahren sind Stellen, die eine Entfernung von dem Maximum des Profils haben, die der einfachen und der zweifachen Standardabweichung $\sigma_f$ des Gaußsches Profils entsprechen **(Fig. 3).**

Die einfache Standardabweichung $\sigma_f$ ausgehend vom Maximum des Profils zeigt auf einen Punkt, an dem das Grauwertprofil einen Wendepunkt $I_{turn}$ (turn point) besitzt. Hier kann sich damit theoretisch eine Kante *3* befinden:

$$I_{turn} = I_{surf} * \xi_1 , \qquad (2)$$

wobei:

$I_{surf}$ - die Objekthelligkeit;

$\xi_1$ - der Wendepunktkoeffizient:

$$\xi_1 = e^{-\frac{1}{2}}. \qquad (3)$$

Die zweifache Standardabweichung $2\sigma_f$ ausgehend vom Maximum des Profils zeigt auf einen Punkt, an dem das Grauwertprofil die Intensität von dem Strahlrand hat und sich damit der Hintergrund *1* befindet:

$$I_{bgrd} = I_{surf} * \xi_2 ,\qquad(4)$$

wobei:

$\xi_2$ -   der Randpunktkoeffizient:

$$\xi_2 = e^{-2}.\qquad(5)$$

Der Abstand zwischen den Punkten, welche die Werte $I_{turn}$ und $I_{bgrd}$ aufweisen, entspricht ebenso der Standardabweichung $\sigma_f$ und ist vom jeweiligen Grauwertprofil **(Fig. 3)** streng abhängig. Das Verhältnis zwischen diesen Werten ist jedoch für alle möglichen Grauwertprofile, die über eine Kante **3** verlaufen, konstant und stellt einen minimalen Helligkeitsfaktor $\eta_0$ dar. Nach (2) bis (5) gilt:

$$\eta_0 = \frac{I_{bgrd}}{I_{turn}} = \frac{\xi_2}{\xi_1} = e^{-\frac{3}{2}}.\qquad(6)$$

Damit stellt der Helligkeitsfaktor $\eta_0$ ein minimales Verhältnis zwischen den Helligkeiten der erst möglichen Kantenposition **3** und dem Hintergrund **1** dar.

Um die Position der zu untersuchenden Kante **3** auf dem Grauwertprofil zu finden, soll eine Teststrecke definiert werden, mit der das Grauwertprofil abgesucht wird.

Die Länge der Teststrecke $L_0$ darf dabei nicht kleiner als der Abstand zwischen dem Wendepunkt $I_{turn}$ und dem Randpunkt (Hintergrundhelligkeit $I_{bgrd}$) sein, was der Standardabweichung $\sigma_f$ des Grauwertprofils entspricht. Gleichzeitig darf die Teststrecke $L_0$ die doppelte Größe der Standardabweichung $\sigma_f$ nicht überschreiten. Sonst wird die Teststrecke größer als der gesamte Übergangsbereich **7** zwischen dem Hintergrund **1** und dem Objekt **2 (Fig. 3).** Dann kann die Kantensuche nur nach der kantenspezifischen minimalen Helligkeitssteigung $\Delta I_0$, ohne Berücksichtigung der kantenspezifischen minimalen Helligkeit $I_0$, die eine wichtige Bedingung für die adaptive Kantenerkennung darstellt, durchgeführt werden. Deshalb soll folgende Bedingung erfüllt werden:

$$\sigma_f < L_0 < 2 * \sigma_f.\qquad(7)$$

Dies bedeutet, dass eine Kante **3** anwesend ist, solange die folgenden Bedingungen innerhalb der Teststrecke $L_0$ erfüllt sind:

$$I_{max} \geq I_0 ;\qquad(8)$$

$$\Delta I = I_{max} - I_{min} \geq \Delta I_0 ,\qquad(9)$$

wobei:

$$\frac{I_{min}}{I_{max}} = \eta \geq \eta_0 ,\qquad(10)$$

$I_{max}$ -   die lokale maximale Helligkeit innerhalb der Teststrecke $L_0$ ;
$I_{min}$ -   die lokale minimale Helligkeit innerhalb der Teststrecke $L_0$ ;
$\Delta I$   die lokale Helligkeitssteigung innerhalb der Teststrecke $L_0$ ;
$\eta$ -   der lokale Helligkeitsfaktor innerhalb der Teststrecke $L_0$ .

Zur Bestimmung der Parameter $I_0$ und $\Delta I_0$ werden folgende Grenzfälle betrachtet. Wenn der Endpunkt der Teststrecke $L_0$ bereits die Objektoberfläche **2** erreicht hat:

$$I_{max} = I_{surf} \, , \tag{11}$$

ist die Kante **3** noch immer innerhalb dieser Teststrecke. Dann folgt aus (10):

$$I_{min} = I_{max} * \eta_0. \tag{12}$$

Die lokale minimale Helligkeit $I_{min}$ entspricht dabei noch nicht der Objekthelligkeit ($I_{min} < I_{surf}$) aber nicht mehr der Hintergrundhelligkeit ($I_{min} > I_{bgrd}$). Sie weist nun auf einen Übergangsbereich **7** zwischen dem Hintergrund **1** und dem Objekt **2,** in dem sich eine Kante **3** befinden kann, und bestimmt damit die minimale Helligkeit $I_0$. Die kantenspezifische minimale Helligkeit $I_0$ kann dann mit Hilfe von (12) und (11) folgendermaßen berechnet werden:

$$I_0 = I_{surf} * \eta_0 \, , \tag{13}$$

Befindet sich der Endpunkt der Teststrecke $L_0$ bereits in einer Position, die der Helligkeit $I_0$ entspricht, und der Startpunkt noch auf dem Hintergrund **1**, soll im Falle einer wirklichen Kante erst die Bedingung (9) erfüllt sein. D. h. die Suche nach einer Kante darf nur dann angefangen werden, wenn die lokale Helligkeitssteigung $\Delta I$ innerhalb der Teststrecke $L_0$ die kantenspezifische minimale Helligkeitssteigung $\Delta I_0$ erreicht. Unter der Annahme, dass der Startpunkt der Teststrecke $L_0$ sich im günstigsten Fall in einer Position befindet, die den Helligkeitswert null aufweist, kann die kantenspezifische minimale Helligkeitssteigung $\Delta I_0$, die die Startbedingungen für die Kantensuche bestimmt, folgendermaßen definiert werden:

$$\Delta I_0 = I_0 - 0 = I_0 = I_{surf} * \eta_0. \tag{14}$$

Damit kann eine Kante **3** zwischen den zwei folgenden Positionen und nur dort vorhanden sein. Die erste Position entspricht dem Endpunkt der Teststrecke $L_0$, wenn die Bedingungen (8) und (9) zum ersten Mal innerhalb der Teststrecke $L_0$ gleichzeitig erfüllt sind. Die zweite Position entspricht dem Startpunkt der Teststrecke $L_0$, wenn die Bedingungen (8) und (9) zum letzten Mal innerhalb der Teststrecke $L_0$ gleichzeitig erfüllt sind.
Da das Grauwertprofil eine Gaußsche Funktion darstellt, folgt aus (13) und (1) unter der Annahme, dass der Endpunkt der Teststrecke $L_0$ die Helligkeit $I_{surf}$ und der Startpunkt die Helligkeit $I_0$ besitzt:

$$\eta_0 = \frac{I_0}{I_{surf}} = e^{-\frac{1}{2}(\frac{L_0}{\sigma_f})^2} . \tag{15}$$

Aus (15) und (6) kann dann die Länge der Teststrecke $L_0$ berechnet werden:

$$L_0 = \sqrt{3} * \sigma_f \, , \tag{16}$$

die bildspezifisch und gleichzeitig kurvencharakteristisch für die Kantensuche ist.
Aus dem Grauwertprofil **(Fig. 3)** kann mit Hilfe bekannter konventioneller Rechenmethoden, z.B. die Methode der kleinsten Quadrate, die Standardabweichung $\sigma_f$ dieses Profils als Gaußschen Profils ermittelt werden.
Eine weitere Möglichkeit die Standardabweichung $\sigma_f$ des Grauwertprofils mit einer größeren Sicherheit und Genauigkeit zu ermitteln, besteht darin, zusätzliche Parameter des Grauwertprofils zu benutzen. Zu diesen Parametern gehören der untere Helligkeitsschwellwert $I_{sprt\_dark}$ und der obere Helligkeitsschwellwert $I_{sprt\_light}$ sowie der untere Sicherheitsabstand $\delta_{dark}$ und der obere Sicherheitsabstand $\delta_{light}$ (**Fig. 3**), die diese Helligkeitsschwellwerte bestimmen.
Der untere Helligkeitsschwellwert $I_{sprt\_dark}$ und der obere Helligkeitsschwellwert $I_{sprt\_light}$ trennen den Übergangsbereich **7** zwischen dem Objekt **2** und dem Hintergrund **1** auf dem Grauwertprofil (Fig. 3) von den restlichen Bereichen, die mit möglichen Störungen belastet sein können. Dies erlaubt eine sichere Kurvendiskussion, die beispielsweise für die Ermittlung der Standardabweichung $\sigma_f$ der Kurve benötigt wird.
Die Schwellwerte $I_{sprt\_dark}$ und $I_{spr\_light}$ können folgendermaßen definiert werden. Die kantenspezifische minimale Helligkeit $I_0$ soll größer sein als die möglichen Abweichungen von der Hintergrundhelligkeit $I_{bgrd}$ nach oben, die vom Rauschen verursacht werden können **(Fig. 3),** und gleichzeitig die kantenspezifische minimale Helligkeitssteigung $\Delta I_0$ gewährleisten, die vom minimalen Helligkeitsfaktor $\eta_0$ und von der Objekthelligkeit $I_{surf}$ abhängig ist. Deswegen kann der untere Helligkeitsschwellwert $I_{sprt\_dark}$ als die kantenspezifische minimale Helligkeit $I_0$ **(Fig. 3)** angenommen werden. Nach (13) gilt:

$$I_{sprt\_dark} = I_0 = I_{surf} * \eta_0. \tag{17}$$

Der Wertbereich [$I_{bgrd}$ - $I_{sprt\_dark}$] kann als Sicherheitszone im Hintergrundbereich mit dem Sicherheitsabstand $\delta_{dark}$ zwischen dem Hintergrund **1** und der Stelle, ab der eine Kante **3** vorhanden sein kann, für die Kurvendiskussion des Grauwertprofils **(Fig. 3)** dienen.

Der Wertbereich [$I_{sprt\_light}$ - $I_{surf}$] kann analog dazu als Sicherheitszone im Objektbereich mit dem Sicherheitsabstand $\delta_{light}$ zwischen der Stelle, ab der eine Kante **3** nicht mehr vorhanden sein kann, und dem Objekt **2** für die Kurvendiskussion des Grauwertprofils **(Fig. 3)** dienen. Dabei kann die kantenspezifische minimale Helligkeitssteigung $\Delta I_0$ den notwendigen Unterschied zwischen der Objekthelligkeit $I_{surf}$ und dem oberen Helligkeitsschwellwert $I_{sprt\_light}$ gewährleisten:

$$I_{sprt\_light} = I_{surf} - \Delta I_0. \tag{18}$$

Aus (18) und (14) folgt:

$$I_{sprt\_light} = I_{surf} * (1 - \eta_0). \tag{19}$$

Aus dem Grauwertprofil und zwar aus dem von den Helligkeitsschwellwerten $I_{sprt\_dark}$ und $I_{sprt\_light}$ beschränkten Bereich **(Fig. 3)** kann dann mit Hilfe bekannter konventioneller Rechenmethoden, z.B. die Methode der kleinsten Quadrate, die Standardabweichung $\sigma_f$ des Grauwertprofils ermittelt werden.

Die Standardabweichung $\sigma_f$ kann auch durch eine Hilfstrecke $I_0$ berechnet werden, die dem Abstand zwischen den Positionen entspricht, an denen das Profil zuerst den Wert $I_{sprt\_dark}$ und zuerst den Wert $I_{sprt\_light}$ aufweist. Da das Grauwertprofil eine Gaußsche Funktion darstellt, gilt nach (19) und (1):

$$\frac{I_{sprt\_light}}{I_{surf}} = e^{-\frac{1}{2}\left(\frac{\delta_{light}}{\sigma_f}\right)^2} = 1 - \eta_0. \tag{20}$$

Aus (20) folgt:

$$\delta_{light} = \sqrt{-2 * \ln(1 - \eta_0)} * \sigma_f. \tag{21}$$

Für die Hilfstrecke $I_0$ erhält man aus dem Grauwertprofil (**Fig. 3**):

$$I_0 = L_0 - \delta_{light}. \tag{22}$$

Aus (22), (21) und (16) folgt:

$$I_0 = (\sqrt{3} - \sqrt{-2 * \ln(1 - \eta_0)}) * \sigma_f. \tag{23}$$

Mit $\eta_0$ aus (6) ergibt sich der Faktor:

$$(\sqrt{3} - \sqrt{-2 * \ln(1 - \eta_0)}) \approx 1{,}0217. \tag{24}$$

Da sich $I_0$ somit nur geringfügig von $\sigma$ unterscheidet, und als Länge der Teststrecke $L_0$ nur eine ganzzahlige Anzahl der Pixel verwendet wird, kann die Hilfsstrecke $I_0$ ohne einen Verallgemeinerungsverlust direkt als Standardabweichung $\sigma_f$ des Grauwertprofils angenommen werden:

$$\sigma_f \cong I_0. \tag{25}$$

Nun können die Grenzwerte für die Objekthelligkeit $I_{surf}$ und Hintergrundhelligkeit $I_{bgrd}$ sowie für die Objekthomogenität $H_{surf}$ und die Schärfe $\sigma_f$ des Verfahrens zu einem Selbsttest eines Bildverarbeitungssystems definiert werden.

Falls die Bedingung (10) für die Objekthelligkeit $I_{surf}$ und Hintergrundhelligkeit $I_{bgrd}$ erfüllt ist, unterscheidet sich die Objekthelligkeit $I_{surf}$ von der Hintergrundhelligkeit $I_{bgrd}$ genügend, um eine zwischen dem Objekt **2** und dem Hintergrund **1** entstehende Kante **3** sicher erkennen zu können. Dann darf das zu untersuchende Objekt **2** als eine strahlende Quelle angenommen werden.

Daraus folgt, dass die dynamische obere Grenze der Hintergrundhelligkeit $I_{bgrd\_\text{max}}$ nach (10), (15) und (16) folgendermaßen definiert werden kann:

$$I_{bgrd\_\text{max}} = I_{surf} * \eta_0. \tag{26}$$

Falls aber:

$$I_{bgrd} > I_{surf} * \eta_0,$$

soll ein absolut maximaler Wert für die Hintergrundhelligkeit $I_{bgrd\_\text{max}\_abs}$ definiert werden, bei dem noch eine Kantenerkennung gewährleistet werden kann. Das ist möglich, solange **( Fig. 3):**

$$I_{surf} - I_{bgrd} \geq 2 * \Delta I_0. \tag{27}$$

Aus (27) und (14) folgt:

$$I_{bgrd\_\text{max}\_abs} = I_{surf} * (1 - 2 * \eta_0). \tag{28}$$

Damit kann ein zulässiger maximaler Wert $I_{bgrd\_\text{max}}$ für die Hintergrundhelligkeit folgendermaßen definiert werden:

$$I_{bgrd\_\text{max}} = I_{surf} * \eta, \tag{29}$$

wobei: $\eta$ - ein Helligkeitskoeffizient, dessen Größe im Bereich:

$$\eta_0 \leq \eta \leq (1 - 2 * \eta_0) \tag{30}$$

nach Erfahrungswerten festgestellt werden kann.

Die absolut maximale Helligkeit des Objektes **2** wird allerdings durch den Wert $I_{\text{max}\_abs}$ begrenzt, den ein Aufnahmesensor maximal aufweisen kann (z.B. 255 bei Vollaussteuerung und 8-bit Quantisiereung des Sensors).

Nach (26) weist die entsprechende Hintergrundhelligkeit $I_{bgrd\_\text{max}}$ einen Wert auf, der gleichzeitig die Objekthelligkeit $I_{surf}$ von unten begrenzt. Damit kann die absolut minimale zulässige Objekthelligkeit $I_{surf\_\text{min}}$, die nie erreicht werden darf, folgendermaßen definiert werden:

$$I_{surf\_\text{min}} = I_{\text{max}\_abs} * \eta_0. \tag{31}$$

Die obere Grenze des Linearitätsbereiches des Aufnahmesensors $I_{lin}$ (z.B. 220) begrenzt die maximale Objekthelligkeit, die praktisch noch von Bedeutung ist. Dann gilt für die obere Grenze des zulässigen Helligkeitsbereiches des Objektes $I_{surf\_max}$:

$$I_{surf\_max} = I_{lin} \, . \qquad (32)$$

Aus einer Gaußförmigen Helligkeitsverteilung (Histogrammkurve) einer Oberfläche **(Fig. 2)** kann der Helligkeitswert $I_{Gauss}$, der die maximale Häufigkeit aufweist, und die Standardabweichung $\sigma_{I_{Gauss}}$ ermittelt werden. Dabei liegen ca. 95% aller Helligkeitswerten des Gaußförmigen Histogramms der Oberfläche im Bereich [$I_{max}$ - 2 * $\sigma_I$ - $I_{max}$ + 2 * $\sigma_I$]. Damit stellt der Wert 2 * $\sigma_{I_{Gauss}}$ ein Maß der Helligkeitsabweichungen von dem häufigstem Wert $I_{Gauss}$ dar. Aus diesem folgt, dass je größer $\sigma_{I_{Gauss}}$ ist, desto niedrigere Homogenität der Oberfläche besitzt. Damit kann die Homogenität einer Oberfläche folgendermaßen definiert werden:

$$H = 1 - \frac{2 * \sigma_{I_{Gauss}}}{I_{Gauss}} . \qquad (33)$$

Der Parameter $H$ zeigt die normierte Streuung der Helligkeitswerte einer Oberfläche, die von der Oberflächenhelligkeit unabhängig ist.

Dementsprechend kann die Objekthomogenität $H_{surf}$ und die Hintergrundhomogenität $H_{bgrd}$ definiert werden:

$$H_{surf} = 1 - \frac{2 * \sigma_{I_{surf}}}{I_{surf}} ; \qquad (34)$$

$$H_{bgrd} = 1 - \frac{2 * \sigma_{I_{bgrd}}}{I_{bgrd}} , \qquad (35)$$

wobei:

$\sigma_{I_{surf}}$ - die Standardabweichung der Gaußförmigen Histogrammkurve des Objektes;
$\sigma_{I_{bgrd}}$ - die Standardabweichung der Gaußförmigen Histogrammkurve des Hintergrundes.

Die obengenannten Bedingungen für einen Selbsttest wurden für ein Objekt **2** und einen Hintergrund **1** definiert, die eine homogene Oberfläche aufweisen und damit eine absolut maximale Homogenität haben:

$$H_{max\_abs} = 1. \qquad (36)$$

Falls aber das Objekt **2** und der Hintergrund **1** keine homogene Oberfläche aufweisen, soll eine minimale Grenze der Oberflächenhomogenität $H_{min}$ definiert werden, die noch eine Kantenerkennung gewährleisten kann.

Die untere Grenze des Homogenitätsbereiches des Objektes [$I_{surf}$ - 2 * $\sigma_{I_{surf}}$ - $I_{surf}$ + 2 * $\sigma_{I_{surf}}$] darf auf keinen Fall den oberen Helligkeitsschwellwert $I_{sprt\_light}$ unterschreiten:

$$I_{surf} - 2 * \sigma_{I_{surf}} > I_{sprt\_light} . \qquad (37)$$

Damit kann die minimale zulässige Homogenität $H_{min}$ für die Objekthomogenität $H_{surf}$ aus (37), (34) und (19) folgendermaßen definiert werden:

$$H_{min} = \frac{I_{sprt\_light}}{I_{surf}} = (1 - \eta_0). \qquad (38)$$

Aufgrund des normierten Charakters der Homogenität kann für die Hintergrundhomogenität $H_{bgrd}$ ebenfalls denselben Wert nach (38) als minimale zulässige Homogenität $H_{min}$ angenommen werden.

Die Standardabweichung $\sigma_{I_{surf}}$ bzw. $\sigma_{I_{bgrd}}$ kann mit Hilfe bekannter konventioneller Rechenmethoden, z.B. die Methode der kleinsten Quadrate, aus den entsprechenden Grauwertprofilen ermittelt werden.

Für inhomogenen Oberflächen verschärfen sich die Testbedingungen für die Beleuchtung, weil bei der Definition des zulässigen Bereiches der Helligkeit sowohl des Objektes *2* als auch des Hintergrundes *1* der entsprechende Homogenitätsbereich [$I_{Gauss} - 2 * \sigma_{I_{Gauss}} - I_{Gauss} + 2 * \sigma_{I_{Gauss}}$] berücksichtigen werden soll.

Erfindungsgemäß können die entsprechenden Grenzwerte für $I_{surf}$ nach (32) und (31) sowie für $I_{bgrd}$ nach (26) mit Berücksichtigung des Wertes $2 * \sigma_{I_{Gauss}}$ **(Fig. 2)** folgendermaßen definiert werden:

$$I_{surf\_min} = I_{max\_abs} * \eta_0 + 2 * \sigma_{I_{surf}} ; \qquad (39)$$

$$I_{surf\_max} = I_{lin} - 2 * \sigma_{I_{surf}} , \qquad (40)$$

$$I_{bgrd\_max} = (I_{surf} - 2 * \sigma_{I_{surf}}) * \eta_0 - 2 * \sigma_{I_{bgrd}}. \qquad (41)$$

Diese Grenzwerte können und sollen dynamisch aus dem zu untersuchenden Bild ermittelt und zur Kontrolle benutzt werden.

Allerdings kann eine wesentlich größere Sicherheit erreicht werden, falls man für den Selbsttest die minimale zulässige Homogenität $H_{min}$ als maßgebend vorgibt. Dabei soll der Korrekturterm ($+ 2 * \sigma_{I_{Gauss}}$) bzw. ($- 2 * \sigma_{I_{Gauss}}$) durch den Faktor $\frac{1}{1 - \eta_0}$ bzw. $\frac{1}{1 + \eta_0}$ ersetzt werden. Dann kann man die Grenzwerte für $I_{surf}$ jeweils mit einem eigenen festen Koeffizient korrigieren, die nach (31) und (32) **(Fig. 2)** folgendermaßen fest definiert werden:

$$I_{surf\_min} = I_{max\_abs} * \frac{\eta_0}{1 - \eta_0} ; \qquad (42)$$

$$I_{surf\_max} = I_{lin} * \frac{1}{1 + \eta_0} . \qquad (43)$$

Für $I_{bgrd}$ sieht die Bedingung (26) mit Berücksichtigung der maximalen Homogenitätsbereiche **(Fig. 2)** folgendermaßen aus:

$$I_{bgrd\_max} * (1 + \eta_0) = I_{surf} * (1 - \eta_0) * \eta_0. \qquad (44)$$

Damit kann der entsprechende maximale Grenzwert $I_{bgrd\_max}$ nach (44) fest definiert werden:

$$I_{bgrd\_max} = I_{surf} * \eta_0 * \frac{1 - \eta_0}{1 + \eta_0}. \qquad (45)$$

An einer schwacherkennbaren Kante *3,* wobei:

- für ein homogenes Objekt *2* und einen homogenen Hintergrund *1* nach (26):

$$I_{bgrd} > I_{surf} * \eta_0 ;$$

- für ein inhomogenes Objekt *2* und einen inhomogenen Hintergrund *1* nach (41):

$$I_{bgrd} > (I_{surf} - 2 * \sigma_{I_{surf}}) * \eta_0 - 2 * \sigma_{I_{bgrd}} \; ;$$

bzw. nach (45):

$$I_{bgrd} > I_{surf} * \eta_0 * \frac{1 - \eta_0}{1 + \eta_0},$$

kann der Selbsttest durchgeführt werden, wenn folgenden Bedingungen erfüllt sind. Vor allem darf die Oberflächen- und Hintergrundhomogenität nicht die minimale Homogenität unterschreiten:

$$H_{surf} \geq H_{min} \; ;$$

$$H_{bgrd} \geq H_{min} \; .$$

Außerdem darf die Hintergrundhelligkeit $I_{bgrd}$ den absoluten Grenzwert $I_{bgrd\_max\_abs}$ für eine noch erkennbare Kante *3* ebenso nicht überschreiten. Dies wird nicht passieren **(Fig. 3),** solange:

$$I_{sprt\_light} \geq I_{sprt\_dark}. \tag{46}$$

Daraus folgt:

- für ein homogenes Objekt *2* und einen homogenen Hintergrund *1* nach (28)-(30):

$$I_{bgrd\_max\_abs} = I_{surf} * (1 - 2 * \eta_0) \; ;$$

$$I_{bgrd\_max} = I_{surf} * \eta,$$

- für ein inhomogenes Objekt *2* und einen inhomogenen Hintergrund *1*:

  - falls die Beleuchtung mit einem dynamisch korrigierten Grenzwert kontrolliert wird, nach (14), (27), (35) und (37):

$$I_{bgrd\_max\_abs} = (I_{surf} - 2 * \sigma_{I_{surf}}) * (1 - 2 * \eta_0) - 2 * \sigma_{I_{bgrd}} \; ; \tag{47}$$

$$I_{bgrd\_max} = (I_{surf} - 2 * \sigma_{I_{surf}}) * \eta - 2 * \sigma_{I_{bgrd}} \; ; \tag{48}$$

  - falls die Beleuchtung mit einem Grenzwert kontrolliert wird, der mit einem festen Koeffizient korrigiert ist, nach (27) mit Berücksichtigung (14) und der maximalen Homogenitätsbereiche **(Fig. 2):**

$$I_{surf} * (1 - \eta_0) - I_{bgrd\_max\_abs} * (1 + \eta_0) = 2 * I_{surf} * \eta_0. \tag{49}$$

Daraus folgt:

$$I_{bgrd\_max\_abs} = I_{surf} * \frac{(1 - \eta_0) * (1 - 2 * \eta_0)}{1 + \eta_0} \; ; \tag{50}$$

$$I_{bgrd\_\max} = I_{surf} * \frac{1 - \eta_0}{1 + \eta_0} * \eta, \tag{51}$$

wobei:

$$\eta_0 \leq \eta \leq (1 - 2 * \eta_0).$$

Desweiteren soll überprüft werden, ob die zu untersuchende Musterkante scharf genug abgebildet ist. Die Standardabweichung $\sigma_f$ des Grauwertprofils **(Fig. 3),** die mit Hilfe bekannter konventioneller Rechenmethoden, z.B. die Methode der kleinsten Quadrate, ermittelt werden soll, kann für die Schärfenkontrolle benutzt werden.

Solange gilt:

$$I_{sprt\_light} > I_{sprt\_dark},$$

können die Werte $I_{sprt\_light}$ und $I_{sprt\_dark}$ dazu benutzt werden, um auf dem Grauwertprofil **(Fig. 3)** einen Bereich abzutrennen, auf dem die Standardabweichung $\sigma_f$ mit einer größeren Sicherheit und Genauigkeit berechnet werden kann.

Allerdings kann die Hilfsteststrecke $l_0$, die man als Abstand zwischen den Positionen auf dem Grauwertprofil **(Fig. 3)** ermittelt, an denen das Profil zuerst den Wert $I_{sprt\_dark}$ und zuerst den Wert $I_{sprt\_light}$ aufweist, nach (25) ohne einen Verallgemeinerungsverlust als Standardabweichung $\sigma_f$ des Gaußförmigen Grauwertprofils angenommen werden.

Die Werte $I_{sprt\_light}$ und $I_{sprt\_dark}$ können ebenso benutzt werden, um auf dem Helligkeitshistogramm des Objektes **(Fig. 2, a)** bzw. des Hintergrundes **(Fig. 2, b)** einen Bereich abzutrennen, auf dem die Standardabweichung $\sigma_{I_{surf}}$ bzw. $\sigma_{I_{bgrd}}$ mit einer größeren Sicherheit und Genauigkeit berechnet werden kann.

Damit lässt sich ein Selbsttest, der eine sichere und flexible Beleuchtungs- und Schärfenkontrolle eines Bildes gewährleistet, so durchführen dass die auf dem Bild vorhandenen Kanten explizit erkannt werden können.

Bezugszeichenliste

**1** Hintergrund
**2** Objekt
**3** Kante zwischen dem Hintergrund und dem Objekt
**4** Testbereich auf dem Hintergrund
**5** Testbereich auf dem Objekt
**6** Suchlinie
**7** Übergangsbereich zwischen dem Hintergrund und dem Objekt

**Patentansprüche**

**1.** Verfahren zum Selbsttest eines Bildverarbeitungssystems, das dazu dient die Beleuchtung und die Schärfe eines mit einem Kamerasensor aufgenommenen Bildes zu kontrollieren, das ein Objekt **2** auf einem Hintergrund **1** enthält, die mindestens eine Kante **3** bilden, **dadurch gekennzeichnet, dass** der Selbsttest an der Kante **3** stattfindet, wobei das Histogramm aus dem ersten Testbereich **4** , das den Hintergrund **1** enthält, und das Histogramm aus dem zweiten Testbereich **5** , das das Objekt **2** enthält, sowie das Grauwertprofil entlang der Suchlinie **6,** die quer zu der Kante **3** verläuft, als Gaußverteilungen behandelt und als Ausgangsdaten benutzt werden sollen, aus denen die Objekthelligkeit $I_{surf}$ (*surface*), die Hintergrundhelligkeit $I_{bgrd}$ (*background*) sowie die Standardabweichung $\sigma_f$ (*focus*) des Grauwertprofils ermittelt und miteinander bzw. mit den u.a. aus den kameracharakteristischen Daten berechneten Referenzwerten, verglichen werden sollen.

Patentgemäß ist der Selbsttest folgendermaßen durchzuführen.

Aus dem Histogramm des zu untersuchenden Testbereiches **4** findet man die Hintergrundhelligkeit $I_{bgrd}$ und aus dem Histogramm des zu untersuchenden Testbereiches **5**-die Objekthelligkeit $I_{surf}$, wobei diese Helligkeiten als der am häufigsten vorkommende Wert des entsprechenden Histogramms ermittelt werden sollen.

Dabei geht man davon aus, dass das Objekt **2** beispielsweise immer heller als der Hintergrund **1** ist. Ansonsten sollen die Rollen des Objektes und des Hintergrundes vertauscht werden.

Desweiteren geht man davon aus, dass das Objekt **2** und der Hintergrund **1** homogen sind.

Anhand dieser gewonnenen Merkmale soll zuerst die Beleuchtung des aufgenommenen Bildes kontrolliert werden, wobei die Helligkeitswerte $I_{bgrd}$ und $I_{surf}$ nach folgenden Bedingungen überprüft werden:

$$I_{surf\_min} < I_{surf} \leq I_{surf\_max};$$

$$I_{bgrd} \leq I_{bgrd\_max},$$

wobei:

$I_{surf\_min}$ - die untere Grenze des zulässigen Helligkeitsbereiches des Objektes:

$$I_{surf\_min} = I_{max\_abs} * \eta_0 ;$$

$I_{max\_abs}$ - die absolut maximale Helligkeit (z.B. 255 bei Vollaussteuerung und 8-bit Quantisiereung), die ein Sensor aufweisen kann;

$I_{surf\_max}$ - die obere Grenze des zulässigen Helligkeitsbereiches des Objektes, die der oberen Grenze des Linearitätsbereiches der Kamera $I_{lin}$ (z.B. 220) entspricht:

$$I_{surf\_max} = I_{lin} ;$$

$I_{bgrd\_max}$ - die obere Grenze des zulässigen Helligkeitsbereiches des Hintergrundes, die dynamisch ermittelt werden soll:

$$I_{bgrd\_max} = I_{surf} * \eta_0 ;$$

$\eta_0$ - der Helligkeitsfaktor, der eine allgemeine grundlegenden Konstante für die Kantenerkennung darstellt:

$$\eta_0 = \frac{\xi_2}{\xi_1} = e^{-\frac{3}{2}};$$

$\xi_1$ - der Wendepunktkoeffizient, der die Intensität eines Strahles am Wendepunkt seiner Intensitätsverteilung bestimmt:

$$\xi_1 = e^{-\frac{1}{2}};$$

$\xi_2$ - der Randpunktkoeffizient, der die Intensität eines Strahles an seinem Rand bestimmt:

$$\xi_2 = e^{-2}.$$

Falls die obengenannten Bedingungen nicht erfüllt sind, ist das aufgenommene Bild nicht korrekt beleuchtet. Ansonsten ist die Beleuchtung des aufgenommenen Bildes in Ordnung und anschließend soll die Schärfe überprüft werden.

Aus dem Grauwertprofil kann mit Hilfe bekannter konventioneller Rechenmethoden, z.B. die Methode der kleinsten Quadrate, die Standardabweichung $\sigma_f$ ermittelt werden.

Erfindungsgemäß soll diese mit der maximalen zulässigen Standardabweichung $\sigma_{f\_max}$ verglichen werden, die im Voraus folgendermaßen berechnet wird:

$$\sigma_{f\_max} = \sigma_{f\_min} + \Delta\sigma_f,$$

wobei:

$\sigma_{f\_min}$ - die Standardabweichung des Grauwertprofils an der Kante **3** bei einem am schärfsten aufgenommenen Bild, die auch aus dem Mittelwert der an mehreren Stellen der zu untersuchenden Kante **3** ermittelten Werte $\bar{\sigma}_f$ berechnet werden kann;

$\Delta\sigma_f$ - zulässige Abweichung der Standardabweichung $\sigma_f$ von minimalem Wert $\sigma_{f\_min}$, z.B. 0.5, die nach Erfahrungswerten festgestellt werden muss.

Falls gilt:

$$\sigma_f \leq \sigma_{f\_max},$$

ist die Schärfe des aufgenommenen Bildes in Ordnung.

2. Verfahren nach Anspruch 1, **dadurch gekennzeichnet, dass** der Selbsttest an einer schwacherkennbaren Kante **3** zwischen einem homogenen Objekt **2** und einem homogenen Hintergrund **1** mit:

$$I_{bgrd} > I_{surf} * \eta_0,$$

durchgeführt werden kann, solange die Hintergrundhelligkeit $I_{bgrd}$ den entsprechenden maximalen Grenzwert für eine noch erkennbare Kante **3:**

$$I_{bgrd\_max} = I_{surf} * \eta$$

nicht überschreitet, wobei: $\eta$- ein Helligkeitskoeffizient, dessen Größe im Bereich:

$$\eta_0 \leq \eta \leq (1 - 2 * \eta_0)$$

nach Erfahrungswerten festgestellt werden kann.

3. Verfahren nach Anspruch 1, **dadurch gekennzeichnet, dass** der Selbsttest bei einem inhomogenen Objekt **2** und einem inhomogenen Hintergrund **1** durchgeführt werden kann, falls ihre Homogenitäten $H_{surf}$ und $H_{bgrd}$ eine minimale Homogenität $H_{min}$ nicht unterschreiten, wobei:

$$H_{surf} = 1 - \frac{2 * \sigma_{I_{surf}}}{I_{surf}};$$

$\sigma_{I_{surf}}$ - die Standardabweichung der Gaußförmigen Histogrammkurve des Objektes;

$$H_{bgrd} = 1 - \frac{2 * \sigma_{I_{bgrd}}}{I_{bgrd}};$$

$\sigma_{I_{bgrd}}$ - die Standardabweichung der Gaußförmigen Histogrammkurve des Hintergrundes;

$$H_{min} = (1 - \eta_0).$$

Dabei verschärfen sich die Testbedingungen für die Beleuchtung, die man erfindungsgemäß entweder mit den dynamisch korrigierten Grenzwerten

$$I_{surf\_min} = I_{max\_abs} * \eta_0 + 2 * \sigma_{I_{surf}} ;$$

$$I_{surf\_max} = I_{lin} - 2 * \sigma_{I_{surf}} ;$$

$$I_{bgrd\_max} = (I_{surf} - 2 * \sigma_{I_{surf}}) * \eta_0 - 2 * \sigma_{I_{bgrd}}$$

oder mit den Grenzwerten, die jeweils mit einem eigenen festen Koeffizient korrigiert sind,

$$I_{surf\_min} = I_{max\_abs} * \frac{\eta_0}{1 - \eta_0} ;$$

$$I_{surf\_max} = I_{lin} * \frac{1}{1 + \eta_0} ;$$

$$I_{bgrd\_max} = I_{surf} * \eta_0 * \frac{1 - \eta_0}{1 + \eta_0}$$

kontrollieren kann.

4. Verfahren nach Anspruch 1 bis 3, **dadurch gekennzeichnet, dass** der Selbsttest an einer schwacherkennbaren Kante *3* zwischen einem inhomogenen Objekt *2* und einem inhomogenen Hintergrund *1* mit:

- falls die Beleuchtung mit einem dynamisch korrigierten Grenzwert kontrolliert wird:

$$I_{bgrd} > I_{surf} * \eta_0 - 2 * \sigma_{I_{surf}} * \eta_0 - 2 * \sigma_{I_{bgrd}};$$

- falls die Beleuchtung mit einem Grenzwert kontrolliert wird, der mit einem festen Koeffizienten korrigiert ist:

$$I_{bgrd} > I_{surf} * \eta_0 * \frac{1 - \eta_0}{1 + \eta_0} ,$$

durchgeführt werden kann, wenn dabei gilt:

$$H_{surf} \geq H_{min} ;$$

$$H_{bgrd} \geq H_{min} ,$$

und solange die Hintergrundhelligkeit $I_{bgrd}$ den entsprechenden maximalen Grenzwert für eine noch erkennbare Kante *3* $I_{bgrd\_max}$ nicht überschreitet, der folgendermaßen definiert werden kann:

- falls die Beleuchtung mit einem dynamisch korrigierten Grenzwert kontrolliert wird:

$$I_{bgrd\_max} = (I_{surf} - 2 * \sigma_{I_{surf}}) * \eta - 2 * \sigma_{I_{bgrd}};$$

- falls die Beleuchtung mit einem Grenzwert kontrolliert wird, der mit einem festen Koeffizienten korrigiert ist:

$$I_{bgrd\_max} = I_{surf} * \frac{1 - \eta_0}{1 + \eta_0} * \eta \ ,$$

wobei: $\eta$ - ein Helligkeitskoeffizient, dessen Größe im Bereich:

$$\eta_0 \leq \eta \leq (1 - 2 * \eta_0)$$

nach Erfahrungswerten festgestellt werden kann.

5. Verfahren nach Anspruch 1 bis 4, **dadurch gekennzeichnet, dass** die untere und die obere Grenze des zulässigen Helligkeitsbereiches des Objektes $I_{surf\_min}$ und $I_{surf\_max}$ sowie die obere Grenze des zulässigen Helligkeitsbereiches des Hintergrundes $I_{bgrd\_max}$ nach Erfahrungswerten festgestellt und im weiteren als Referenzwerte verwendet werden können.

6. Verfahren nach Anspruch 1 bis 5, **dadurch gekennzeichnet, dass** der Wert $I_{surf}$, falls die entsprechenden Bedingungen für die Beleuchtungskontrolle erfüllt sind, benutzt werden kann, um den unteren Helligkeitsschwellwert

$$I_{sprt\_dark} = I_{surf} * \eta_0$$

und den oberen Helligkeitsschwellwert

$$I_{sprt\_light} = I_{surf} * (1 - \eta_0)$$

zu berechnen, welche dazu dienen, den mittleren Bereich des Grauwertprofils von den beiden äußeren Randbereichen abzutrennen, damit die Ermittlung der Standardabweichung $\sigma_f$ mit wesentlich höherer Genauigkeit und Sicherheit ausschließlich aus dem mittleren Bereich der Grauwertprofilskurve mit Hilfe bekannter konventioneller Rechenmethoden, z.B. die Methode der kleinsten Quadrate, durchgeführt werden kann.

7. Verfahren nach Anspruch 1 und 6, **dadurch gekennzeichnet, dass** die Hilfsteststrecke $I_0$, die man als Abstand zwischen den Positionen auf dem Grauwertprofil ermittelt, an denen das Profil zuerst den Wert $I_{sprt\_dark}$ und zuerst den Wert $I_{sprt\_light}$ aufweist, als Standardabweichung $\sigma_f$ des Gaußförmigen Grauwertprofils angenommen werden kann:

$$\sigma_f \cong I_0.$$

8. Verfahren nach Anspruch 1 bis 7, **dadurch gekennzeichnet, dass** die Suchlinie **6,** die evtl. mehrmals angelegt werden kann, quer zu der zu untersuchenden Kante **3,** jedoch innerhalb des Testbereiches **4** und des Testbereiches **5** liegen soll, wobei das Grauwertprofil sowohl aus einer einzelnen Pixelreihe als auch als Mittelwertkurve aus mehreren, z.B. drei, parallel zur Suchlinie **6** liegenden benachbarten Pixelreihen gebildet werden kann.

9. Verfahren nach Anspruch 1 bis 8, **dadurch gekennzeichnet, dass** nur jede einzelne zu untersuchende Kurve aber nicht das Bild selbst geglättet werden soll.

10. Verfahren nach Anspruch 1 bis 9, **dadurch gekennzeichnet, dass** eine morphologische Filterung für die Glättung der zu untersuchenden Kurven verwendet werden soll.

**Fig. 1**

a)

b)

**Fig. 2**

Fig. 3